# EUROPEAN PATENT SPECIFICATION

(11) **EP 1 147 066 B1**
(45) Date of publication and mention of the grant of the patent: **07.05.2003**
(21) Application number: 99968353.5
(22) Date of filing: 15.12.1999
(51) Int. Cl.: C03C 17/36

(54) **GLAZING PANEL**
VERGLASUNGSSCHEIBE
PANNEAU DE VITRAGE

(30) Priority: 18.12.1998 EP 98204314
(43) Date of publication of application: 24.10.2001
(73) Proprietor: GLAVERBEL, 1170 Bruxelles (BE)
(72) Inventor: AOMINE, Nobutaka Asahi Glass Company Limited, Yokohama-shi Kanagawa 221-8755 (JP); DECROUPET, Daniel Glaverbel Centre R & D, B-6040 Jumet (BE); EBISAWA, Junichi Asahi Glass Company Limited, Yokohama-shi Kanagawa 221-8755 (JP); NODA, Kazuyoshi Asahi Glass Company Limited, Aiko-gun Kanagawa 243-0301 (JP); TAKEDA, Satoshi Asahi Glass Company Limited, Yokohama-shi Kanagawa 221-8755 (JP)
(74) Representative: Farmer, Guy
(86) International application number: EP9910074
(87) International publication number: WO00037381

(56) References cited:
- EP-A- 0 464 789
- EP-A- 0 747 330
- EP-A- 0 751 099
- US-A- 5 834 103

## Description

This invention relates to glazing panels and particularly, but not exclusively, to solar control glazing panels which are intended to undergo heat treatment following application of a solar control filter.

EP 233003A describes a glazing panel carrying a sputter coated optical filter having the structure: glass substrate/ SnO₂ base dielectric/ first metallic barrier of Al, Ti, Zn, Zr or Ta / Ag / second metallic barrier of Al, Ti, Zn, Zr or Ta / SnO₂ top dielectric. The optical filter is designed to block a significant portion of the incident radiation in the infra red portion of the spectrum whilst allowing passage of a significant portion of the incident radiation in the visible portion of the spectrum. In this way, the filter acts to reduce the heating effect of incident sunlight whilst allowing good visibility through the glazing and is particularly suitable for car windscreens.

In this type of structure, the Ag layer acts to reflect incident infra red radiation; in order to fulfil this role it must be maintained as silver metal rather than silver oxide and must not be contaminated by adjacent layers. The dielectric layers which sandwich the Ag layer serve to reduce the reflection of the visible portion of the spectrum which the Ag layer would otherwise provoke. The second barrier serves to prevent oxidation of the Ag layer during sputtering of the overlying SnO₂ dielectric layer in an oxidising atmosphere; this barrier is at least partially oxidised during this process. The main role of the first barrier is to prevent oxidation of the silver layer during heat treatment of the coating (e.g. during bending and/or tempering) of the glazing panel by being oxidised itself rather than allowing passage of oxygen to the Ag layer. This oxidation of the barrier during heat treatment provokes an increase in TL of the glazing panel.

EP 792847A discloses a heat treatable solar control glazing panel which is based on the same principle and has the structure: glass substrate/ ZnO dielectric/ Zn barrier/ Ag / Zn barrier/ ZnO dielectric/ Zn barrier/ Ag / Zn barrier/ ZnO dielectric. The Zn barriers positioned below each of the Ag layers are intended to be oxidised completely during heat treatment and serve to protect the Ag layers from oxidation. As well known in the art, the structure of having two, spaced Ag layers rather than a single Ag layer increases the selectivity of the filter.

EP 275474 A discloses a heat treatable solar control panel having the structure: glass substrate/ zinc stannate dielectric/ Ti barrier/ Ag/ Ti barrier/ zinc stannate dielectric. Ti barriers are generally favoured in this type of heat treatable structure due to their high affinity for oxygen and relative ease with which they can be oxidised to form titanium oxide.

According to one aspect, the present invention provides a glazing panel as defined in Claim 1.

Providing the defined combination of layers in at least one of the antireflective layers provides an advantageous combination of properties. The antireflective layers must not only carry out their principal role of preventing excessive reflection in the visible portion of the spectrum but must also for example, be compatible with the other layers in the coating stack, be mechanically and chemically resistant and be suited to production on an industrial scale.

Any suitable method or combination of methods may be used to deposit the coating layers. For example, evaporation (thermal or electron beam), liquid pyrolysis, chemical vapour deposition, vacuum deposition and sputtering, particularly magnetron sputtering, the latter being particularly preferred. Different layers of the coating stack may be deposited using different techniques.

The present invention may provide an advantageous combination of:
- thermal stability if the glazing panel is heated, for example during tempering and/or bending. Notably, use of the present invention may reduce degradation of the infra red reflecting layer when compared with comparable structures using, for example, known ZnO or SnO₂ antireflective layers. In particular, the nitride layer may block migration and/or diffusion of oxygen and/or ions through the coating stack and the specified mixed oxide layer may both enhance this and may be thermally more stable than other known oxides.
- ease and controllability of deposition: the antireflective layer according to the present invention may be deposited more easily and with more control than, for example, Al₂O₃ or SiO₂. Whilst Al₂O₃ and SiO₂ shows a good degree of thermal stability they are difficult to deposit using common sputtering techniques.
- mechanical resistance: the antireflective layer according to the present invention may be used without prejudicing the mechanical resistance of the coating. In particular, it may perform well in pummel tests when the glazing panel is used in a laminated structure.
- compatibility with Ag: crystallisation of the Ag layer affects its optical properties. A pure ZnO layer adjacent the Ag can lead to excessive crystallisation of the Ag particularly during heat treatment and to problems of haze in the coating. However, where an antireflective layer does not consist of ZnO there may be insufficient recrystallisation of the Ag layers resulting in a level of infra red reflection and a level of electrical conductivity in the coating which are below the optimum obtainable. The present invention may be used to favour crystallisation to a sufficient degree to provide good infra red reflecting properties whilst avoiding excessive haze. In particular, it may provide a favourable crystallisation compared with an antireflective layer composed of TiO₂. One possible explanation for this may be that the presence of the material X in the zinc oxide structure may reduce the crystal grain growth in the mixed oxide layer, especially perpendicular to the substrate. This may result in a less crystalline, more amorphous structure which reduces diffusion that might otherwise be likely to occur at crystal grain boundaries.
- production cycle time: an oxide layer which is a mixture of Zn and at least one of the specified addition materials, particularly when the additional material is Ti, Ta, Zr, Nb, Bi or a mixture of these metals, will generally have a higher refractive index than antireflective layers of, for example, ZnO and SnO₂, which are commonly used in similar structures and yet will be quicker to deposit than known antireflective layers having relatively high refractive indexes, for example, TiO₂. Consequently, this may enable the production cycle time to be improved.
- good selectivity: the higher refractive index may, in addition, facilitate an increase in the selectivity of the coating stack, particularly when the additional material is Ti, Ta, Zr, Nb, Bi or a mixture of these metals.

Use of the antireflective layer in accordance with the present invention as the or part of the top antireflective layer, particularly as a layer exposed to the atmosphere may provide good chemical and mechanical resistance. Furthermore, it may provide good compatibility with a laminating film, for example a pvb film, if the glazing panel is to be laminated to form, for example, a car windscreen or other laminated glazing panel.

The advantageous properties of the antireflective layer according to the present invention may not be obtainable if the atomic ratio X/Zn is below the specified minimum, for example, if the material X is present only in the form of an impurity or if the atomic ratio X/Zn is not sufficiently great.

The layer which comprises a nitride preferably comprises at least one of the specified materials Al, Si or Zr in an amount of at least 10%of the nitrided atoms. The layer which comprises a nitride may comprise, for example, a nitride of aluminium, a nitride of silicon, a mixed nitride comprising Al and Si, a mixed nitride comprising Al and Zr, a mixed nitride comprising Si and Zr, a mixed nitride comprising Al, Si and Zr. This layer may be used to block migration and/or dissipation of oxygen in the coating layers and migration and/or diffusion of ions and other substances from the glass substrate into the coating layers, particularly sodium and potassium.

The layer which comprises a nitride may consist essentially of AlN, Si₃N₄, ZrN or a mixture thereof.

The nitride layer may be deposited by sputtering a target in a nitrogen atmosphere. Alternatively, it may be deposited by sputtering a target in an atmosphere which is a mixture of argon and nitrogen.

The nitride layer may comprise a pure nitride or, for example, an oxynitride, a carbonitride or an oxycarbonitride.

The infra red reflecting material may be silver or a silver alloy, for example an alloy of silver containing one or more of Pd, Au, and Cu as an additional material. Such an additional material may be present in the silver alloy in an atomic ratio based on the total amount of silver and additional metal of 0.3 to 10%, preferably 0.3 to 5% and more particularly, especially where the additional material is Pd 0.3 to 2%.

Claim 2 defines a particularly advantageous arrangement of the layers of the coating stack. In this arrangement:
- in the base antireflective layer, the defined nitride layer, which is preferably deposited directly on the surface of the glass substrate, provides a good barrier to ion and oxygen diffusion from the glass substrate whilst the overlying mixed oxide layer provides particularly good compatibility with the infra-red reflecting layer
- in the top dielectric, the mixed oxide layer provides particularly good compatibility with the infra-red reflecting layer whilst the defined nitride layer provides a good barrier to oxygen diffusion from the atmosphere.
   This is particularly so when the glazing panel is intended to be heat treated.
   As defined in Claim 3, the advantageous combination of properties obtainable with the antireflective layer according to the present invention may be utilised in a coating stack having two, or indeed more than two, spaced infra-red reflecting layers.
   Multiple spaced infra-red reflecting layers may be used to provide the glazing panel with a selectivity that is greater than 1.5 or 1.7.
   Particularly advantageous properties may be obtained if additional material X in the mixed oxide layer consists
- essentially of Ti
- of Ti with one or more additional materials from the specified group of materials, for example, Ti and Al
- essentially of Al
- of Al with one or more additional materials from the specified group of materials.

The filter stack may comprise one or more barrier layers underlying and/or overlying the infra red reflecting layer, as is known in the art. Barriers of, for example, one or more of the following material may be used: Ti, Zn, Cr, "stainless steel", Zr, Ni, NiCr, NiTi, ZnTi and ZnAl. Such barriers may be deposited, for example, as metallic layers or as sub-oxides (i.e. partially oxidised layers). Alternatively, nitrided barrier layers may also be used.

One or more of such barrier layers may comprise the same materials as the mixed oxide layer, particularly the adjacent mixed oxide layer. This may facilitate management of targets and control of deposition conditions and in the latter case may prove good adhesion between the layers and thus good mechanical durability of the coating stack.

The combination of properties that may be provided by the present invention have particular advantages in relation to heat treatable and heat treated glazing panels. Nevertheless, the invention may also be used in respect of glazings which are not heat treated. The term "heat treatable glazing panel" as used herein means that the glazing panel carrying the coating stack is adapted to undergo a bending and/or thermal tempering and/or thermal hardening operation and/or other heat treatment process without the haze of the so treated glazing panel exceeding 0.5, and preferably without the haze exceeding 0.3. The term "substantially haze free heat treated glazing panel" as used herein means a glazing panel carrying a coating stack which has been bent and/or thermally tempered and/or thermally hardened and/or subject to another heat treatment process after deposition of the coating stack and has a haze that does not exceed 0.5 and which preferably does not exceed 0.3. Such heat treatment processes may involve heating or exposing the glazing carrying the coating stack or to a temperature greater than about 560 °C, for example, between 560 °C and 700°C in the atmosphere. Other such heat treatment processes may be sintering of a ceramic or enamel material, vacuum sealing of a double glazing unit and calcination of a wet-coated low reflective coating or anti-glare coating. The heat treatment process, especially when this is a bending and/or thermal tempering and/or thermal hardening operation, may be carried out at a temperature of at least, 600 °C for at least 10 minutes, 12 minutes, or 15 minutes , at least 620 °C for at least 10 minutes, 12 minutes, or 15 minutes, or at least 640 °C for at least 10 minutes, 12 minutes, or 15 minutes.

The thickness of the mixed oxide layer in accordance with the present invention is preferably at least 50 Å; this may provide a sufficient quantity to have a worthwhile or noticeable effect. The mixed oxide layer used in the coating stack in accordance with the present invention may have a thickness of at least 80 Å, 100 Å, 120 Å, 140 Å or 160 Å.

An oxide layer which is a mixture of Zn and at least one of the specified addition materials may be used to confer advantageous properties on one, more than one or preferably all of the antireflective layer in the coating stack. Use in all of the antireflective layers of the coating stack may simplify process control and ordering and storage of the necessary targets. Where more than one antireflective layers comprises an oxide layer which is a mixture of Zn and at least one of the specified addition materials, such oxide layers may have the same or substantially the same composition.

A particularly advantageous combination of the properties discussed above may be obtained when the atomic ratio X/Zn is within the range of about 0.03-1, preferably about 0.05-0.6 and more preferably about 0.08-0.5. Good result may also be obtained with an atomic ratio X/Zn of at least 0.12, 0.15, or 0.3.

Heat treatment may provoke an increase in the TL of the glazing panel. Such an increase in TL may be advantageous in ensuring that TL is sufficiently high for the glazing panel to be used in a vehicle windscreen. TL may increase in absolute terms during heat treatment by , for example, greater than about 2.5%, greater than about 3%, greater than about 5% , greater than about 8% or greater than about 10%.

Nevertheless, the coating stack may be arranged such that there is no significant increase in TL during heat treatment. One way of facilitating this is to avcid the use of metallic barrier layers underneath the infra-red reflective layer(s).

According to another aspect, the present invention provides a method of manufacturing a glazing panel as defined in Claim 12. Such a method may be used to manufacture, for example, heat treated architectural glazing panels, vehicle glazings and particularly windscreens.

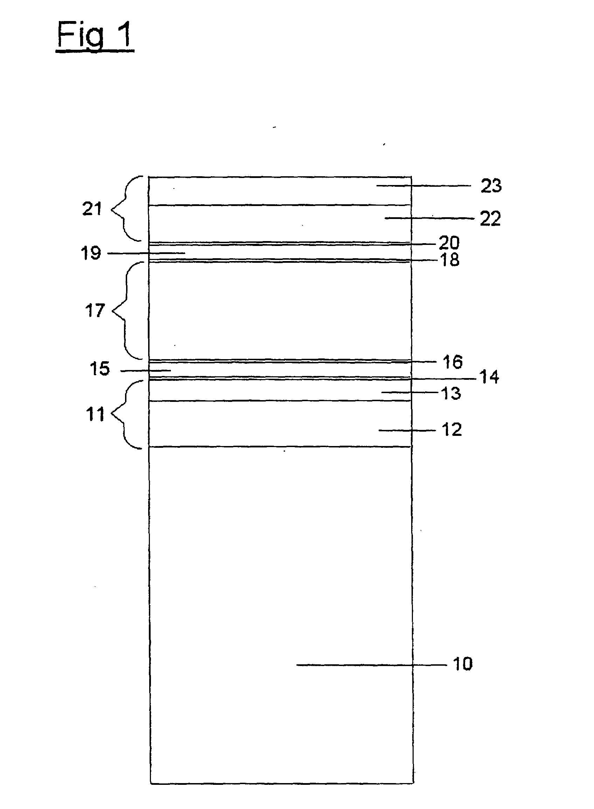

Examples of the present invention will now be described with reference to Fig 1 which is a cross-section through a glazing panel prior to a bending and tempering operation (for ease of representation, the relative thicknesses of the glazing panel and coating layers are not shown to scale).

### Example 1

Fig 1 shows a double Ag layer, heat treatable, coating layer deposited on a glass substrate by magnetron sputtering and having the following sequential structure:

| | Reference number | Geometrical thickness | Atomic ratios |
|---|---|---|---|
| Glass substrate | 10 | 2 mm | |
| Base dielectric comprising: | 11 | | |
| AlN | 12 | 60 Å | |
| ZnAlOx | 13 | 250 Å | Al/Zn=0.1 |
| ZnAlOy underlying barrier | 14 | 10 Å | Al/Zn=0.1 |
| Ag | 15 | 100 Å | |
| ZnAlOy overlying barrier | 16 | 12 Å | Al/Zn=0.1 |
| Central dielectric comprising | | | |
| ZnAlOx | 17 | 750 Å | Al/Zn=0.1 |
| ZnAlOy underlying barrier | 18 | 7 Å | Al/Zn=0.1 |
| Ag | 19 | 100 Å | |
| ZnAlOy overlying barrier | 20 | 17 Å | Al/Zn=0.1 |
| Top dielectric comprising: | | | |
| ZnAlOx | 22 | 185 Å | Al/Zn=0.1 |
| AlN | 23 | 85 Å | |

in which ZnAlOx is a mixed oxide containing Zn and Al deposited in this example by reactively sputtering a target which is an alloy or mixture of Zn and Al in the presence of oxygen.

Alternatively, a mixed oxide layer may be formed by sputtering a target which is a mixture of zinc oxide and an oxide of material X, particularly in an argon gas or argon rich oxygen containing atmosphere.

The ZnAlOy barriers are similarly deposited by sputtering a target which is an alloy or mixture of Zn and Al in an argon rich oxygen containing atmosphere to deposit a barrier that is not fully oxidised.

The oxidation state in each of the base, central and top ZnAlOx dielectric layers need not necessarily be the same. Similarly, the oxidation state in each of the ZnAlOy barriers need not be the same. Equally, the Al/Zn ratio need not be the same for all of the layers; for example, the barrier layers may have a different Al/Zn ratio to the antireflective dielectric layers and the antireflective dielectric layers may have different Al/Zn ratios from each other.

Each overlying barrier protects its underlying silver layer from oxidation during sputter deposition of its overlying ZnAlOx oxide layer. Whilst further oxidation of these barriers layers may occur during deposition of their overlying oxide layers a portion of these barriers preferably remains in the form of an oxide that is not fully oxidised to provide a barrier for subsequent heat treatment of the glazing panel.

This particular glazing panel is intended for incorporation in a laminated vehicle windscreen and displays the following properties:

| Property | Prior to heat treatment ^{see Note 1 below} | Following heat treatment ^{see Note 2 below} |
|---|---|---|
| TL(Illuminant A) | 63% | 76% |
| TE (System Moon 2) | 38% | 42% |
| haze | 0.1 | 0.25 |
| a* | -20 (coated side) | -6 (external) |
| b* | +3 (coated side) | -12(extemal) |
| RE (System Moon 2) | 31% (coated side) | 33%(external) |
| Note 1: Measured for monolithic glazing panel with coating prior to heat treatment | | |
| Note 2: Measured following heat treatment at 650° C for 10 minutes followed by bending and tempering, and lamination with clear 2mm glass sheet and 0.76mm clear pvb | | |

Heat treatment preferably causes substantially complete oxidation of all of the barrier layers such that the structure of the coating stack after heat treatment is:

| | Reference number | Geometrical thickness | Atomic ratios |
|---|---|---|---|
| Glass substrate | 10 | 2 mm | |
| Base dielectric comprising: | 11 | | |
| AlN (partially oxidised) | 12 | 60 Å | |
| ZnAlOx | 13 | 250 Å | Al/Zn=0.1 |
| ZnAlOx (oxidised underlying barrier) | 14 | 10 Å - 16 Å | Al/Zn=0.1 |
| Ag | 15 | 100 Å | |
| ZnAlOx (oxidised overlying barrier) | 16 | 12 Å -20 Å | Al/Zn=0.1 |
| Central dielectric comprising | | | |
| ZnAlOx | 17 | 750 Å | Al/Zn=0.1 |
| ZnAlOx (oxidised underlying barrier ) | 18 | 7 Å -12 Å | Al/Zn=0.1 |
| Ag | 19 | 100 Å | |
| ZnAlOx (oxidised overlying barrier) | 20 | 17 Å - 28 Å | Al/Zn=0.1 |
| Top dielectric comprising: | | | |
| ZnAlOx | 22 | 185 Å | Al/Zn=0.1 |
| AlN (partially oxidised) | 23 | 85 Å | |

The AlN (partially oxidised) layers may comprise a mixture of AlN and Al₂O₃, the AlN being partially oxidised during the heat treatment process. The barrier layers are not necessarily completely oxidised and their thickness will depend to a certain extent upon their degree of oxidation.

### Example 2

Example 2 is similar to Example 1, save that the underlying barriers of the coating stack were omitted. The coating stacks and properties of the Example are set out below:

| | Reference number | Geometrical thickness | Atomic ratios |
|---|---|---|---|
| Glass substrate | 10 | 2 mm | |
| Base dielectric comprising: | 11 | | |
| AIN | 12 | 100 Å | |
| ZnAlOx | 13 | 200 Å | Al/Zn=0.1 |
| | | | |
| Ag | 15 | 100 Å | |
| ZnAl overlying barrier | 16 | 10 Å | Al/Zn=0.1 |
| Central dielectric comprising | | | |
| ZnAlOx | 17 | 750 Å | Al/Zn=0.1 |
| | | | |
| Ag | 19 | 100 Å | |
| ZnAl overlying barrier | 20 | 15Å | Al/Zn=0.1 |
| Top dielectric comprising: | | | |
| ZnAlOx | 22 | 185 Å | Al/Zn=0.1 |
| AlN | 23 | 85 Å | |

in which ZnAlOx is a mixed oxide containing Zn and Al deposited in this example by reactively sputtering a target which is an alloy or mixture of Zn and Al in the presence of oxygen. The ZnAl barriers are similarly deposited by sputtering a target which is an alloy or mixture of Zn and Al in a substantially inert, oxygen free atmosphere.

At least a portion of the overlying barriers 16, 20 is oxidised during deposition of their overlying oxide layers. Nevertheless, a portion of these barriers preferably remains in metallic form, or at least in the form of an oxide that is not fully oxidised to provide a barrier for subsequent heat treatment of the glazing panel.

This particular glazing panel is intended for incorporation in a laminated vehicle windscreen and displays the following properties:

| Property | Prior to heat treatment ^{see Note 1 below} | Following heat treatment ^{see Note 2 below} |
|---|---|---|
| TL (Illuminant A) | 70% | 77% |
| TE (System Moon 2) | 41% | 43% |
| haze | 0.1 | 0.2 |
| a* | -17 (coated side) | -5 (external) |
| b* | +8 (coated side) | -9 (external) |
| RE (System Moon 2) | 33% (coated side) | 34% (external) |
| Note 1: Measured for monolithic glazing panel with coating prior to heat treatment Note 2: Measured following heat treatment at 625° C for 14 minutes followed by bending and tempering, and lamination with dear 2 mm glass sheet and 0.76mm dear pvb | | |

Heat treatment preferably causes substantially complete oxidation of all of the barrier layers such that the structure of the coating stack after heat treatment is:

### Coating stack following heat treatment

| | Reference number | Geometrical thickness | Atomic ratios |
|---|---|---|---|
| Glass substrate | 10 | 2 mm | |
| Base dielectric comprising: | 11 | | |
| AlN (partially oxidised) | 12 | 100 Å | |
| ZnAlOx | 13 | 200 Å | Al/Zn=0.1 |
| Ag | 15 | 100 Å | |
| ZnAlOx (oxidised overlying barrier) | 16 | 12 - 20 Å | Al/Zn=0.1 |
| Central dielectric comprising | | | |
| ZnAlOx | 17 | 750 Å | Al/Zn=0.1 |
| Ag | 19 | 100 Å | |
| ZnAlOx (oxidised overlying barrier) | 20 | 17 - 30 Å | Al/Zn=0.1 |
| Top dielectric comprising: | | | |
| ZnAlOx | 22 | 185 Å | Al/Zn=0.1 |
| AIN (partially oxidised) | 23 | 85 Å | |

### Example 3

Example 3 uses ZnAlOx deposited directly on the glass substrate. The coating stacks and properties of the Example are set out below:

| | Geometrical thickness | Atomic ratios |
|---|---|---|
| Glass substrate | 2 mm | |
| Base dielectric comprising: | | |
| ZnAlOx | 120 Å | Al/Zn=0.5 |
| ZnAlOx | 200 Å | Al/Zn=0.1 |
| Ag | 100 Å | |
| ZnAl overlying barrier | 12 Å | Al/Zn=0.05 |
| Central dielectric comprising | | |
| ZnAlOx | 830 Å | Al/Zn=0.1 |
| Ag | 110 Å | |
| ZnAl overlying barrier | 15Å | Al/Zn=0.05 |
| Top dielectric comprising: | | |
| ZnAlOx | 200 Å | Al/Zn=0.1 |
| AlN | 75 Å | |

in which ZnAlOx is a mixed oxide containing Zn and Al deposited in this example by reactively sputtering a target which is an alloy or mixture of Zn and Al in the presence of oxygen. The ZnAl barriers are similarly deposited by sputtering a target which is an alloy or mixture of Zn and Al in a substantially inert, oxygen free atmosphere.

At least a portion of each overlying barrier is oxidised during deposition of its overlying oxide layers. Nevertheless, a portion of these barriers preferably remains in metallic form, or at least in the form of an oxide that is not fully oxidised to provide a barrier for subsequent heat treatment of the glazing panel.

This particular glazing panel is intended for incorporation in a laminated vehicle windscreen and displays the following properties:

| Property | Prior to heat treatment ^{see Note 1 below} | Following heat treatment ^{see Note 2 below} |
|---|---|---|
| TL (Illuminant A) | 63% | 76% |
| TE (System Moon 2) | 34% | 44% |
| haze | 0.1 | 0.23 |
| a* | -12 (coated side) | -6 (external) |
| b* | +23 (coated side) | -8 (external) |
| RE (System Moon 2) | 28% (coated side) | 31% (external) |
| Note 1: Measured for monolithic glazing panel with coating prior to heat treatment | | |
| Note 2: Measured following heat treatment at 625° C for 10 minutes followed by bending and tempering, and lamination with dear 2 mm glass sheet and 0.76mm clear pvb | | |

Heat treatment preferably causes substantially complete oxidation of all of the barrier layers.

### Example 4

Example 4 uses SiAlxNy as part of the top antireflective layer. The coating stack and properties of the Example are set out below:

| | Geometrical thickness | Atomic ratios |
|---|---|---|
| Glass substrate | 2 mm | |
| Base dielectric comprising: | | |
| AlN | 150 Å | |
| ZnAlOx | 180 Å | Al/Zn=0.1 |
| Ag | 110 Å | |
| ZnAl overlying barrier | 15 Å | Al/Zn=0.05 |
| Central dielectric comprising | | |
| ZnAlOx | 780 Å | Al/Zn=0.1 |
| Ag | 95 Å | |
| ZnAl overlying barrier | 15Å | Al/Zn=0.05 |
| Top dielectric comprising: | | |
| ZnAlOx | 130 Å | Al/Zn=0.1 |
| SiAlxNy | 90 Å | Al/Si = 0.5 |

SiAlxNy is a mixed nitride comprising aluminium and silicon having an atomic ratio Al/Si of at least 0.1, preferably of at least 0.15, 0.2, 0.3, 0.4 or 0.5 and in this case an atomic ratio Al/Si of 0.5. ZnAlOx is a mixed oxide containing Zn and Al deposited in this example by reactively sputtering a target which is an alloy or mixture of Zn and Al in the presence of oxygen . The ZnAl barriers are similarly deposited by sputtering a target which is an alloy or mixture of Zn and Al in a substantially inert, oxygen free atmosphere.

At least a portion of each overlying barrier is oxidised during deposition of its overlying oxide layer. Nevertheless, a portion of these barriers preferably remains in metallic form, or at least in the form of an oxide that is not fully oxidised to provide a barrier for subsequent heat treatment of the glazing panel.

This particular glazing panel is intended for incorporation in a laminated vehicle windscreen and displays the following properties:

| Property | Prior to heat treatment ^{see Note 1 below} | Following heat treatment ^{see Note 2 below} |
|---|---|---|
| TL (Illuminant A) | 66% | 76% |
| TE (System Moon 2) | 34% | 44% |
| haze | 0.1 | 0.23 |
| a* | -12 (coated side) | -6 (external) |
| b* | +23 (coated side) | -8 (external) |
| RE (System Moon 2) | 28% (coated side) | 31% (external) |
| Note 1: Measured for monolithic glazing panel with coating prior to heat treatment | | |
| Note 2: Measured following heat treatment at 625° C for 14 minutes followed by bending and tempering, and lamination with clear 2 mm glass sheet and 0.76mm clear pvb | | |

Heat treatment preferably causes substantially complete oxidation of all of the barrier layers.

The colour co-ordinates of the examples are particularly suited to car windscreens as they give a neutral or slightly blue or slightly green appearance in reflection when the windscreen is mounted at an angle in the car body. For other applications, for example architectural applications, the colour in reflection may be adjusted as is known in the art by adjusting the thicknesses of the dielectric layers and/or the infra red reflecting layer(s).

Additional layers may be introduced above, below or between the film stacking arrangement if desired without departing from the invention.

In addition to the advantageous optical properties that may be obtained, each of the examples provides a coating layer which may be electrically heated, for example, in an electrically heated car windscreen to provide a de-misting and/or de-frosting function with the addition of suitably placed electrical connectors.

The TL of the glazing panel may be adjusted to suit the desired application. For example
- if the glazing panel is to be used as a windscreen for the European market, TL may be selected to be greater than 75% (as required by European regulations).
- if the glazing panel is to be used as a windscreen for the US market, TL may be selected to be greater than 70% (as required by US regulations).
- if the glazing panel is to be used as a vehicle front sidelight, TL may be adjusted to be greater than 70% (as required by European regulations).
- if the glazing panel is to be used as a vehicle rear sidelight or a rear window for a vehicle, TL may be selected to be between about 30% and 70%.
   Such adjustment of TL may be achieved, for example,
- by adapting the thicknesses of the layers of the coating stack, in particular the thicknesses of the dielectric layers and/or the infra-red reflecting layer(s).
- by combining the coating stack with a tinted glass substrate, for example, in order to increase the selectivity.
- by combining the coating stack with a tinted pvb or other laminating layer.

### Glossary

Unless otherwise indicated by the context, the terms listed below have the following meanings in this specification:

| a* | | colour co-ordinate measured on the ClELab scale at normal incidence |
|---|---|---|
| Ag | silver | |
| Al | aluminium | |
| Al2O3 | aluminium oxide | |
| AIN | aluminium nitride | |
| b* | | colour co-ordinate measured on the ClELab scale at normal incidence |
| Bi | bismuth | |
| Cr | chromium | |
| haze | | the percentage of transmitted light which in passing through the specimen deviates from the incident beam by forward scattering, as measured in accordance with the ASTM Designation D 1003-61 (Reapproved 1988). |
| Hf | hafnium | |
| infra red reflecting material | | a material that has a reflectance higher than the reflectance of sodalime glass in the band of wavelenghts between 780 nm and 50 microns |
| Na | sodium | |
| Nb | niobium | |
| NiCr | | an alloy or mixture comprising nickel and chromium |
| NiTi | | an alloy or mixture comprising nickel and titanium |
| RE | energetic reflection | the solar flux (luminous and non-luminous) reflected from a substrate as a percentage of the incident solar flux |
| Sb | antimony | |
| selectivity | | the ratio of the luminous transmittance to the solar factor i.e. TL/TE |
| Si02 | silicon oxide | |
| Si3N4 | silicon nitride | |
| SnO2 | tin oxide | |
| Ta | tantalum | |
| TE | energetic transmittance | the solar flux (luminous and non-luminous) transmitted through a substrate as a percentage of the incident solar flux |
| Ti | titanium | |
| TL | luminous transmittance | the luminous flux transmitted through a substrate as a percentage of the incident luminous flux |
| Zn | zinc | |
| ZnAl | | an alloy or mixture comprising zinc and aluminium |
| ZnAlOx | | a mixed oxide containing zinc and aluminium |
| ZnAlOy | | a partially oxidised mixture comprising zinc and aluminium |
| ZnO | zinc oxide | |
| ZnTi | | an alloy or mixture comprising zinc and titanium |
| ZnTiOx | | a mixed oxide containing zinc and titanium |
| ZnTiOy | | a partially oxidised mixture comprising zinc and titanium |
| Zr | zirconium | |

## Claims

1. A glazing panel carrying a coating stack comprising in sequence at least :
a glass substrate
a base antireflective layer
an infra-red reflecting layer, and
a top antireflective layer
**characterised in that** at least one of the antireflective layers comprises at least
a) a mixed oxide layer which comprises an oxide which is a mixture of Zn and at least one additional material X, in which the atomic ratio X/Zn is greater than or equal to 0.03 and in which X is one or more of the materials selected from the group comprising the elements of groups 2a, 3a, 5a, 4b, 5b, 6b of the periodic table, and
b) a layer which comprises a nitride comprising at least one of the materials Al, Si and Zr.

2. A glazing panel in accordance with claim 1, comprising in sequence at least a glass substrate
a base antireflective layer comprising a layer which comprises a nitride comprising at least one of the materials Al, Si and Zr and an overlying mixed oxide layer which comprises an oxide which is a mixture of Zn and at least one additional material X, in which the atomic ratio X/Zn is greater than or equal to 0.03 and in which X is one or more of the materials selected from the group comprising the elements of groups 2a, 3a, 5a, 4b, 5b, 6b of the periodic table
an infra-red reflecting layer comprising silver
a barrier layer
a top antireflective layer comprising a mixed oxide layer which comprises an oxide which is a mixture of Zn and at least one additional material X, in which the atomic ratio X/Zn is greater than or equal to 0.03 and in which X is one or more of the materials selected from the group comprising the elements of groups 2a, 3a, 5a, 4b, 5b, 6b of the periodic table and an overlying layer which comprises a nitride comprising at least one of the materials Al, Si and Zr.

3. A glazing panel in accordance with Claim 1 or Claim 2 comprising in sequence at least:
a glass substrate
a base antireflective layer
an infra-red reflecting layer
a central antireflective layer
an infra-red reflecting layer
a top antireflective layer
**characterised in that** at least one of the antireflective layers comprises at least
a) a mixed oxide layer which comprises an oxide which is a mixture of Zn and at least one additional material X, in which the atomic ratio X/Zn is greater than or equal to 0.03 and in which X is one or more of the materials selected from the group comprising the elements of groups 2a, 3a, 5a, 4b, 5b, 6b of the periodic table, and
b) a layer which comprises a nitride comprising at least one of the materials Al, Si and Zr.

4. A glazing panel in accordance with any preceding claim, in which X is one or more of the materials selected from the group comprising Ti and Al.

5. A glazing panel in accordance with any preceding claim, in which a barrier layer underlies at least one or each infrared reflecting layer.

6. A glazing panel in accordance with any preceding claim, in which the glazing panel is a heat treatable or substantially haze free heat treated glazing panel.

7. A glazing panel in accordance with Claim 6, in which the central antireflective layer comprises a mixed oxide layer comprising at least one of ZnAlOx and ZnTiOx.

8. A glazing panel in accordance with any preceding claim, in which the atomic ratio X/Zn of the mixed oxide layer is within the range 0.03-1.

9. A glazing panel in accordance with any preceding claim, in which the atomic ratio X/Zn of the mixed oxide layer is within the range 0.05-0.6.

10. A glazing panel in accordance with any preceding claim, in which the atomic ratio X/Zn of the mixed oxide layer is within the range 0.08-0.5.

11. A glazing panel in accordance with any preceding claim, in which the glazing panel is a heat treatable or substantially haze free heat treated glazing panel and in which heat treatment of the heat treatable glazing panel to form the substantially haze free heat treated glazing panel provokes an increase of the value of TL of the glazing panel of at least 2.5%.

12. A method of manufacturing a glazing panel having a haze of less than about 0.5 comprising the step of subjecting a glazing panel in accordance with any preceding claim to a heat treatment process at at least 570 °C.

## Patentansprüche

1. Glasscheibe, die einen Beschichtungsstapel trägt, umfassend in der Reihenfolge mindestens:
ein Glassubstrat,
eine Antireflexgrundschicht,
eine IR-Strahlung reflektierende Schicht und
eine Antireflexoberschicht,
**dadurch gekennzeichnet, daß** mindestens eine der Antireflexschichten mindestens
a) eine Mischoxidschicht, welche ein Oxid umfaßt, das ein Gemisch von Zn und mindestens einem zusätzlichen Material X ist, worin das Atomverhältnis X/Zn größer als oder gleich 0,03 ist und worin X eines oder mehrere der Materialien, ausgewählt aus der Gruppe, umfassend die Elemente der Gruppen 2a, 3a, 5a, 4b, 5b, 6b des Periodensystems, ist, und
b) eine Schicht, welche ein Nitrid umfaßt, das mindestens eines der Materialien Al, Si und Zr umfaßt,
umfaßt.

2. Glasscheibe gemäß Anspruch 1, umfassend in der Reihenfolge mindestens
ein Glassubstrat,
eine Antireflexgrundschicht, die eine Schicht, welche ein Nitrid umfasst, das mindestens eines der Materialien Al, Si und Zr umfasst, und eine darüberliegende Mischoxidschicht umfasst, welche ein Oxid umfaßt, das ein Gemisch von Zn und mindestens einem zusätzlichen Material X ist, worin das Atomverhältnis X/Zn größer als oder gleich 0,03 ist und worin X eines oder mehrere der Materialien, ausgewählt aus der Gruppe, umfassend die Elemente der Gruppen 2a, 3a, 5a, 4b, 5b, 6b des Periodensystems, ist,
eine IR-Strahlung reflektierende Schicht, umfassend Silber,
eine Sperrschicht,
eine Antireflexoberschicht, umfassend eine Mischoxidschicht, welche ein Oxid umfaßt, das ein Gemisch von Zn und mindestens einem zusätzlichen Material X ist, worin das Atomverhältnis X/Zn größer als oder gleich 0,03 ist und worin X eines oder mehrere der Materialien, ausgewählt aus der Gruppe, umfassend die Elemente der Gruppen 2a, 3a, 5a, 4b, 5b, 6b des Periodensystems, ist, und eine darüberliegende Schicht, welche ein Nitrid umfaßt, das mindestens eines der Materialien Al, Si und Zr umfaßt.

3. Glasscheibe gemäß Anspruch 1 oder 2, umfassend in der Reihenfolge mindestens:
ein Glassubstrat,
eine Antireflexgrundschicht,
eine IR-Strahlung reflektierende Schicht,
eine zentrale Antireflexschicht,
eine IR-Strahlung reflektierende Schicht,
eine Antireflexoberschicht,
**dadurch gekennzeichnet, daß** mindestens eine der Antireflexschichten mindestens
a) eine Mischoxidschicht, welche ein Oxid umfaßt, das ein Gemisch von Zn und mindestens einem zusätzlichen Material X ist, worin das Atomverhältnis X/Zn größer als oder gleich 0,03 ist und worin X eines oder mehrere der Materialien, ausgewählt aus der Gruppe, umfassend die Elemente der Gruppen 2a, 3a, 5a, 4b, 5b, 6b des Periodensystems, ist und
b) eine Schicht, welche ein Nitrid umfaßt, das mindestens eines der Materialien Al, Si und Zr umfaßt,
umfaßt.

4. Glasscheibe gemäß einem vorhergehenden Anspruch, worin X eines oder mehrere der Materialien, ausgewählt aus der Gruppe, umfassend Ti und Al, ist.

5. Glasscheibe gemäß einem vorhergehenden Anspruch, wobei eine Sperrschicht unter mindestens einer oder jeder IR-Strahlung reflektierenden Schicht liegt.

6. Glasscheibe gemäß einem vorhergehenden Anspruch, wobei die Glasscheibe eine wärmebehandelbare oder im wesentlichen trübungsfreie, wärmebehandelte Glasscheibe ist.

7. Glasscheibe nach Anspruch 6, wobei die zentrale Antireflexschicht eine Mischoxidschicht, umfassend mindestens eines von ZnAlOx und ZnTiOx, umfaßt.

8. Glasscheibe gemäß einem vorhergehenden Anspruch, wobei das Atomverhältnis X/Zn der Mischoxidschicht innerhalb des Bereichs 0,03-1 liegt.

9. Glasscheibe gemäß einem vorhergehenden Anspruch, wobei das Atomverhältnis X/Zn der Mischoxidschicht innerhalb des Bereichs von 0,05-0,6 liegt.

10. Glasscheibe gemäß einem vorhergehenden Anspruch, wobei das Atomverhältnis X/Zn der Mischoxidschicht innerhalb des Bereichs von 0,08-0,5 liegt.

11. Glasscheibe gemäß einem vorhergehenden Anspruch, wobei die Glasscheibe eine wärmebehandelbare oder im wesentlichen trübungsfreie, wärmbehandelte Glasscheibe ist und die Wärmebehandlung der wärmebehandelbaren Glasscheibe zur Bildung der im wesentlichen trübungsfreien, wärmebehandelten Glasscheibe einen Anstieg des TL-Wertes der Glasscheibe von mindestens 2,5 % bewirkt.

12. Verfahren zur Herstellung einer Glasscheibe mit einer Trübung von weniger als etwa 0,5, umfassend den Schritt des Unterwerfens einer Glasscheibe gemäß einem vorhergehenden Anspruch einem Wärmebehandlungsverfahren bei mindestens 570°C.

## Revendications

1. Vitrage portant un empilement de revêtements comprenant en séquence au moins :
un substrat en verre
une couche antiréfléchissante inférieure
une couche réfléchissant les infrarouges, et
une couche antiréfléchissante supérieure
**caractérisé en ce qu'**au moins une des couches antiréfléchissantes comprend au moins
a) une couche d'oxyde mélangé qui comprend un oxyde qui est un mélange de Zn et d'au moins un matériau additionnel X, dans lequel le rapport atomique X/Zn est supérieur ou égal à 0,03 et dans lequel X est un ou plusieurs matériaux sélectionnés dans le groupe comprenant les éléments des groupes 2a, 3a, 5a, 4b, 5b, 6b du tableau périodique, et
b) une couche qui comprend un nitrure comprenant au moins un des matériaux Al, Si et Zr.

2. Vitrage conformément à la revendication 1, comprenant en séquence au moins
un substrat en verre
une couche antiréfléchissante inférieure comprenant une couche qui comprend un nitrure comprenant au moins un des matériaux Al, Si et Zr et une surcouche d'oxyde mélangé qui comprend un oxyde qui est un mélange de Zn et d'au moins un matériau additionnel X, dans lequel le rapport atomique X/Zn est supérieur ou égal à 0,03 et dans lequel X est un ou plusieurs des matériaux sélectionnés dans le groupe comprenant les éléments des groupes 2a, 3a, 5a, 4b, 5b, 6b du tableau périodique
une couche réfléchissant les infrarouges comprenant de l'argent
une couche barrière
une couche antiréfléchissante supérieure comprenant une couche d'oxyde mélangé qui comprend un oxyde qui est un mélange de Zn et d'au moins un matériau additionnel X, dans lequel le rapport atomique X/Zn est supérieur ou égal à 0,03 et dans lequel X est un ou plusieurs matériaux sélectionnés dans le groupe comprenant les éléments des groupes 2a, 3a, 5a, 4b, 5b, 6b du tableau périodique, et
une surcouche qui comprend un nitrure comprenant au moins un des matériaux Al, Si et Zr.

3. Vitrage conformément à la Revendication 1 ou à la Revendication 2 comprenant en séquence au moins :
un substrat en verre
une couché antiréfléchissante inférieure
une couche réfléchissant les infrarouges,
une couche antiréfléchissante centrale
une couche réfléchissant les infrarouges
une couche antiréfléchissante supérieure
**caractérisés en ce qu'**au moins une des couches antiréfléchissantes comprend au moins
a) une couche d'oxyde mélangé qui comprend un oxyde qui est un mélange de Zn et d'au moins un matériau additionnel X, dans lequel le rapport atomique X/Zn est supérieur ou égal à 0,03 et dans lequel X est un ou plusieurs matériaux sélectionnés dans le groupe comprenant les éléments des groupes 2a, 3a, 5a, 4b, 5b, 6b du tableau périodique, et
b) une couche qui comprend un nitrure comprenant au moins un des matériaux Al, Si et Zr.

4. Vitrage conformément à l'une quelconque des revendications précédentes, dans lequel X est un ou plusieurs des matériaux sélectionnés dans le groupe comprenant Ti et Al.

5. Vitrage conformément à l'une quelconque des revendications précédentes, dans lequel une couche barrière estsous-jacente à au moins une ou chaque couche réfléchissant les infrarouges.

6. Vitrage conformément à l'une quelconque des revendications précédentes, dans lequel le vitrage est un vitrage susceptible d'être traité thermiquement ou un vitrage traité thermiquement substantiellement exempt de voile.

7. Vitrage conformément à la Revendication 6, dans lequel la couche antiréfléchissante centrale comprend une couche d'oxyde mélangé comprenant au moins un de ZnAlOx et ZnTiOx.

8. Vitrage conformément à l'une quelconque des revendications précédentes, dans lequel le rapport atomique X/Zn de la couche d'oxyde mélangé est dans la gamme de 0,03-1.

9. Vitrage conformément à l'une quelconque des revendications précédentes, dans lequel le rapport atomique X/Zn de la couche d'oxyde mélangé est dans la gamme de 0,05-0,6.

10. Vitrage conformément à l'une quelconque des revendications précédentes, dans lequel le rapport atomique X/Zn de la couche d'oxyde mélangé est dans la gamme de 0,08-0,5.

11. Vitrage conformément à l'une quelconque des revendications précédentes, dans lequel le vitrage est un vitrage susceptible d'être traité thermiquement ou un vitrage traité thermiquement substantiellement exempt de voile et dans lequel le traitement thermique du vitrage susceptible d'être traité thermiquement destiné à former le vitrage traité thermiquement substantiellement exempt de voile provoque une augmentation de la valeur de la TL du vitrage d'au moins 2,5%.

12. Méthode de fabrication d'un vitrage ayant un voile inférieur à environ 0,5 comprenant l'étape consistant à soumettre un vitrage conformément à l'une quelconque des revendications précédentes à un processus de traitement thermique à au moins 570°C.
